# EUROPEAN PATENT APPLICATION

(11) **EP 2 034 321 A2**
(43) Date of publication of application: **11.03.2009**
(21) Application number: 08162957.8
(22) Date of filing: 26.08.2008
(51) Int. Cl.: G01P 1/02, G01P 15/18

(54) **Multiple-axis sensor package and method of assembly**

(30) Priority: 05.09.2007 US 899353
(71) Applicant: Delphi Technologies, Inc., Troy, Michigan 48007 (US)
(72) Inventor: Cluff, Charles A., Zionsville, IN 46077 (US); Cheng, Chean F., 730608, Singapore (SG); Chan, Aik Huang, 546589, Singapore (SG); Chua, Sze Lam, 760155, Singapore (SG)
(74) Representative: Denton, Michael John

(57) **Abstract**

A multiple-axis sensor package (20) and method of assembling a multiple-axis sensor package (20) arc provided. The package (20) includes a first substrate (30) having a first accelerometer (32) for sensing acceleration (Aₓ) in a first sensing axis (X-axis). The package (20) also includes a second substrate (40) having a second accelerometer (42) for sensing acceleration (A_{y}) in a second sensing axis (Y-axis). The package (20) further includes one or more bent lead connectors (90) connecting the first substrate (30) to the second substrate (40), wherein the one or more bent lead connectors (90) are bent so that the first sensing axis (X-axis) is different than the second sensing axis (Y-axis).

## Description

### Technical Field

The present invention generally relates to sensor packaging and, more particularly, to a multiple-axis sensor package and method of assembling a sensor package to sense parameters in multiple sensing axes.

### Background of the Invention

Automotive vehicles are generally equipped with various crash sensing systems that typically include an array of sensors located near anticipated points of contact for relevant potential crashes. In conventional crash sensing systems, crash sensors are usually located on the front, rear, and lateral sides of the vehicle. Accelerometers, also referred to as acceleration sensors, are predominately employed at these locations in vehicle crash sensing systems to sense acceleration. Other types of sensors employed in such crash sensing systems include pressure sensors for detecting side crashes and magnetic field sensors which generally are limited to very low rate applications.

Many sensors, such as the accelerometers, employed in crash sensing systems are generally directional sensitivity sensors that sense a parameter (e.g., acceleration) in a direction along a sensing axis. An accelerometer typically senses acceleration parallel to the axis of sensitivity of the device, and is generally insensitive to accelerations perpendicular to the sensing axis. For signals at an oblique angle (neither parallel nor perpendicular) that the sensor responds to the component parallel to the sensing axis and is generally insensitive to the perpendicular component.

With the increasing number of different types of crashes that are desired to be sensed on a vehicle, the number of sensing axes required is also increasing. To sense signals in multiple sensing axes, vehicle designers are required to use additional crash sensors or to employ sensing devices that sense acceleration or other parameters in multiple sensing axes. Multiple-axis sensing elements may be implemented with micro-electro-mechanical systems (MEMS) technology in which capacitively coupled fingers or plates are arranged in a plane to sense acceleration in two perpendicular sensing axes oriented parallel to the plane of the MEMS device. The in-plane sensing technologies generally have inherent limitations that may be challenging to achieve performance that may be desired for the sensing ranges needed for some automotive crash sensors, particularly those located in peripheral locations. Consequently, the availability of the sensing devices for multiple-axis sensing applications is currently limited for some applications.

Single-axis sensing elements may also be implemented with MEMS technology. The use of multiple single-axis acceleration sensors allows the use of technologies that sense acceleration perpendicular to the plane of the MEMS device. However, the use of such single-axis acceleration sensors in a multiple sensor system generally requires that the MEMS devices be mounted in separate planes relative to each other and electrically connected to each other or to common processing circuitry. This may introduce a significant manufacturing challenge and sufficient additional cost as to make such a sensor impractical in some situations.

Accordingly, it is more desirable to provide for a sensor arrangement to provide multiple-axis sensing that is cost affordable and easy to manufacture. Particularly, it is desirable to provide for a sensor package employing multiple single-axis sensors to effectively achieve a multiple-axis sensing device that is particularly well suited for use on a vehicle, such as for a crash sensor.

### Summary of the Invention

In accordance with the teachings of the present invention, a multiple-axis sensor package and method of assembling a multiple-axis sensor package are provided. According to one aspect of the present invention, a multiple-axis sensor package includes a first substrate having first sensing circuitry for sensing a first parameter in a first sensing axis. The package also includes a second substrate having second sensing circuitry for sensing a second parameter in a second sensing axis. The package further includes one or more bent leads connecting the first substrate to the second substrate, wherein the one or more bent leads are bent so that the first sensing axis is different than the second sensing axis.

According to another aspect of the present invention, a method of assembling a multiple-axis sensor package is provided. The method includes the steps of providing a first substrate and forming a first sensing circuit on the first substrate. The first sensing circuit senses a first parameter in a first sensing axis. The method also includes the steps of providing a second substrate and forming a second sensing circuit on the second substrate. The second sensing circuit senses a second parameter in a second sensing axis. The method further includes the steps of connecting the first substrate to the second substrate with one or more bendable leads and bending the one or more bendable leads so as to orient the first substrate at an angle different than the second substrate such that the first sensing axis is different than the second sensing axis.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:

FIG. 1 is a top view of a vehicle equipped with a crash sensing system employing multiple sensor packages;

FIG. 2 is a perspective view of a multiple axis sensor package, according to one embodiment of the present invention;

FIG. 3 is a perspective view of a partially assembled sensor package showing accelerometers fabricated on lead connected substrates during the assembly process;

FIG. 4 is a perspective view of the sensor package having an overmolded material applied to the substrates during the assembly process;

FIG. 5 is a perspective view of the package following bending of bendable leads according to a further step of the assembly process;

FIG. 6 is a perspective view of the assembled sensor package following application of an injection molded housing;

FIG. 7 is a perspective view of a plurality of sensor substrates connected by way of a lead frame, according to another embodiment; and

FIG. 8 is a perspective view of the sensor substrates of FIG. 7 further illustrating the step of overmolding the substrates.

### Description of the Preferred Embodiments

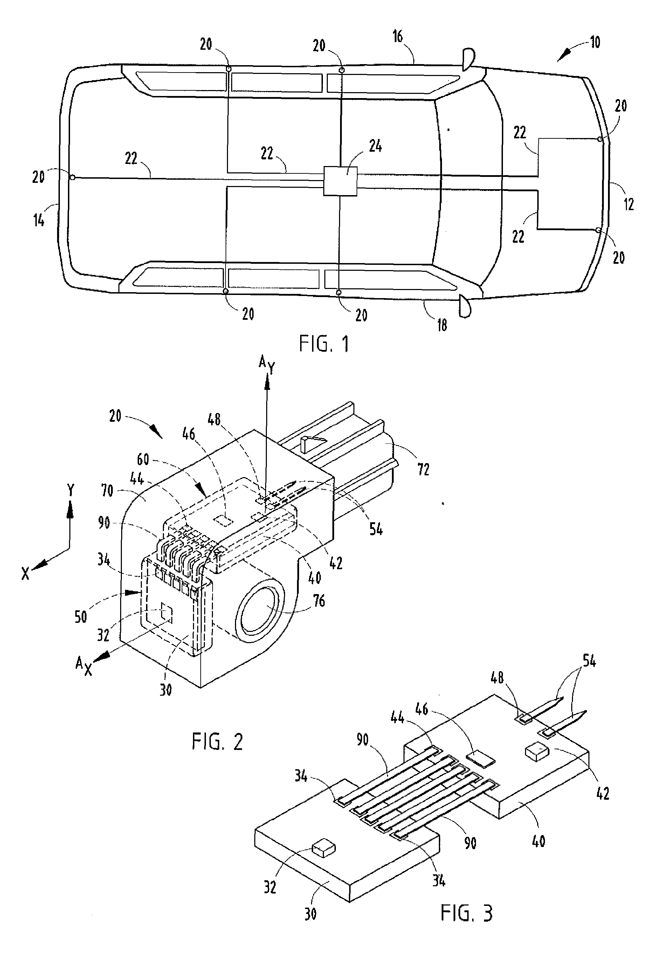

Referring now to FIG. 1, a vehicle, such as an automotive wheeled vehicle, is generally illustrated by reference identifier 10. The vehicle 10 is shown equipped with a crash sensing system having a plurality of crash sensor packages 20 installed at various selected locations on board the vehicle 10. Crash sensor packages 20 are shown in the exemplary embodiment located on the front side 12, rear side 14, and lateral driver and passenger sides 16 and 18, respectively, of vehicle 10. The crash sensor packages 20 may be configured as multiple-axis sensor packages 20 illustrated and described herein, according to one embodiment of the present invention.

The crash sensing system further includes an electronic control unit (ECU) 24 shown coupled to each of the crash sensor packages 20 by way of signal communication lines 22. The signal communication lines 22 may be configured as a communication bus, such as for example in a star, a ring, or other configuration. The signal communication lines 22 communicate sensed data to the ECU 24 and may provide power and control signals to the sensor packages 20. The ECU 24 may include an airbag ECU or other dedicated control unit for processing signals generated by the crash sensor packages 20, as is generally known in a vehicle crash sensing system.

Referring to FIG. 2, a multiple-axis sensor package 20 is illustrated according to one embodiment of the present invention. The crash sensor package 20 includes a first substrate 30 having first sensing circuitry providing a first sensor 32 for sensing a first parameter Aₓ in a first sensing axis (X-axis). The sensor package 20 also includes a second substrate 40 having second sensing circuitry providing a second sensor 42 for sensing a second parameter A_{y} in a second sensing axis (Y-axis). Each of the first and second substrates 30 and 40 may be configured as a printed circuit board having electrical circuitry including circuit traces and contact pads 34 and 44. Additional circuit components, such as Application Specific Integrated Circuit (ASIC) 46, may also be provided in one or both of substrates 30 and 40.

The first and second substrates 30 and 40 are physically and electrically connected together by way of a plurality of bent lead connectors 90. The lead connectors 90 are electrically conductive and are soldered or otherwise connected at opposite ends to contact pads 34 and 44 on first and second substrates 30 and 40, respectively. The bent lead connectors 90 are bent so that the first sensing X-axis is different than the second sensing Y-axis. In the exemplary embodiment, the first sensing X-axis is perpendicular (i.e., 90 degrees) to the second sensing Y-axis. While five bent lead connectors 90 are shown, it should be appreciated that the sensor package 20 may employ one or more bent lead connectors 90.

The first substrate 30 and first sensing circuit 32 are electrically coupled via the lead connectors 90 to the second substrate 40 and circuitry thereon. Output signals generated by the first and second sensing circuits 32 and 42 may be communicated to common signal processing circuitry or other circuitry so as to process the sensed signals. In one embodiment, ASIC 46 may be provided on one or both of the first and second substrates 30 and 40 to provide common signal processing. In the exemplary embodiment, ASIC 46 is located on the second substrate 40. Additionally, the sensor package 20 includes one or more connector pins 54 that enable the sensor package 20 to be connected to other devices. Connector pins 54 are shown soldered or otherwise connected to contact pads 48. In the embodiment shown, connector pins 54 are housed within a connector sheath 72.

In the embodiment shown, the first substrate 30 is substantially encapsulated in an overmold 50, and the second substrate 40 is substantially encapsulated in an overmold 60. The overmold material may include a known electrically non-conductive (dielectric) material such as an epoxy thermoset polymer. The overmolds 50 ad 60 thereby protect the electrical circuitry and reinforce the mechanical connections of the lead connectors 90 to substrates 30 and 40 by covering the interconnections so that the lead connectors 90 can be bent without damaging the mechanical and electrical interconnections between each of contact pads 34 and 44 and lead connectors 90.

Additionally, the sensor package 20 includes an injection molded housing 70 substantially molded around the overmolded first and second substrates. The injection molded housing 70 is also shown molded over a metal connector bushing 76 that is shown located adjacent to both overmolded substrates. The connector bushing 76 allows the sensor package 20 to be fastened or otherwise connected to a supporting structure, such as a structure on a vehicle.

The sensor package 20 employs first and second single-axis sensors 32 and 42 connected together and arranged so as to sense signals in first and second sensing axes, according to the present invention. In the exemplary embodiment, the sensors illustrated are first and second accelerometers with first accelerometer 32 sensing acceleration Aₓ in the X-axis and the second accelerometer 42 sensing acceleration A_{y} in the Y-axis. According to one embodiment, the accelerometers 32 and 42 may each include a piezo resistive micro-electro-mechanical system (MEMS) type accelerometer. One example of a piezo resistive accelerometer is found in sensor Model No. 10381279, commercially available from General Motors, used as the side impact sensor in model year 2007 pickup trucks such as the Chevrolet Silverado and GMC Sierra, and in model year 2007 sport utility vehicles such as the Chevrolet Suburban, Chevrolet Tahoe, GMC Envoy and GMC Yukon. According to another embodiment, the accelerometers 32 and 42 may each include a capacitive type MEMS accelerometer having one or more capacitive plates formed on a substrate for sensing acceleration based on a change of capacitive coupling between the plates. Capacitive type accelerometers may be fabricated using micro-electro-mechanical system (MEMS) fabrications techniques. One example of a MEMS type single-axis accelerometer is disclosed in U.S. Patent No. 6,761,070, entitled "MICROFABRICATED LINEAR ACCELEROMETER," the entire disclosure which is hereby incorporated herein by reference. While the sensors 32 and 42 are described herein as accelerometers according to exemplary embodiments, it should be appreciated that other sensors may be employed in the sensor package 20 to sense other parameters. According to other embodiments, the sensors 32 and 42 may include angular rate sensors, electromagnetic sensors, and other types of sensors for sensing parameters (e.g., acceleration, velocity, etc.) that are generally directional.

The assembly of the sensor package 20 will now be described with reference to FIGS. 3-6. Referring to FIG. 3, the first substrate 30 and second substrate 32 are shown connected together by way of a plurality of electrical lead connectors 90. The first and second substrates 30 and 40 are generally planar and initially are shown aligned in the same plane with straight lead connectors 90 soldered or otherwise connected to contact pads 34 and 44 on one surface of each substrates 30 and 40. Fabricated on top of the first substrate 30 is the first sensing circuit 32 in the form of a first accelerometer. Fabricated on top of the second substrate 40 is the second sensing circuitry 42 in the form of a second accelerometer. Also fabricated on top of the second substrate 40 is ASIC 46 and other electrical circuitry. It should be appreciated that contact pads 34, 44, and 48 may be provided on the substrates 30 and 40, respectively, to allow for electrical and physical connection to each of the substrates. The bent lead connectors 90 are bendable and are generally shown as substantially flat electrically conductive connectors that may be bent into a desired configuration to orient the first substrate 30 at an angle relative to the second substrate 40.

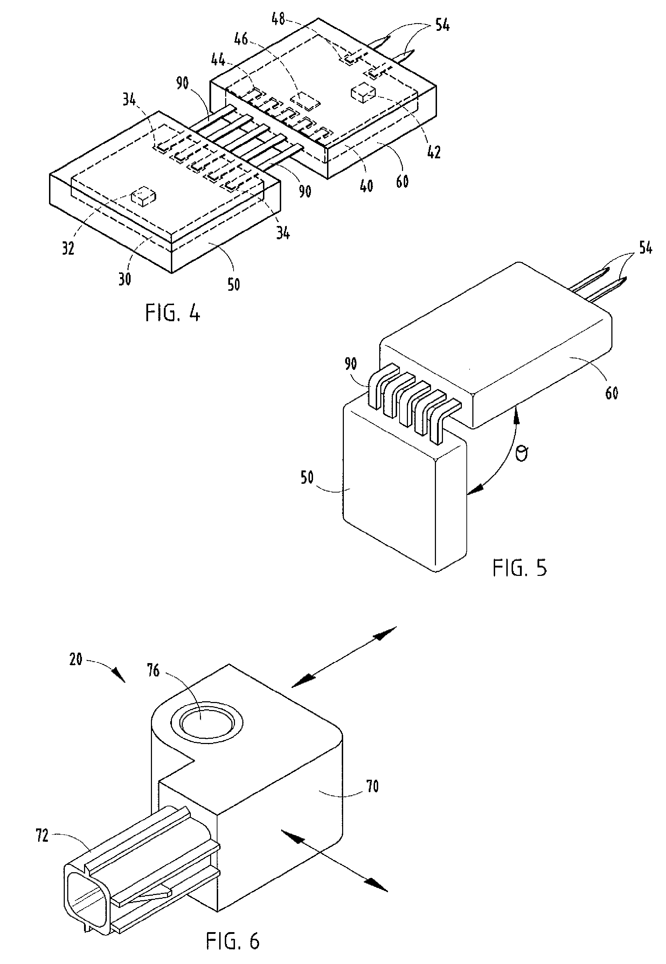

Referring to FIG. 4, the sensor package 20 is illustrated following the step of overmolding the first and second substrates 30 and 40. The first substrate 30 is overmolded with a first overmold material 50 so as to substantially encapsulate the electrical circuitry including the first accelerometer sensor 32, the contact pads 34 and connections to one end of lead connectors 90. Similarly, the second substrate 40 is overmolded with an overmolded material 60 so as to substantially encapsulate the electrical circuitry including the accelerometer 42, the contact pads 44 and connections to the other end of lead connectors 90. The overmold materials 50 and 60 may include an epoxy or other known dielectric overmold material.

Following overmolding of the first and second substrates 30 and 40, the overmolded substrates 50 and 60 are configured into a desired orientation relative to each other by bending the electrical lead connectors 90 as shown in FIG. 5. In the embodiment shown, the electrical lead connectors 90 are bent at angle θ = 90° so that the first overmolded substrate 50 and its accelerometer 32 are substantially perpendicular to the second overmolded substrate 60 and its second accelerometer 42. Thus, the first sensing axis of the first accelerometer 32 is ninety degrees (90°) relative to the second sensing axis of the second accelerometer 42. By bending the electrical lead connectors 90, the first sensing X-axis is different than the second sensing Y-axis. While the lead connectors 90 are bent at angle θ = 90° as illustrated herein according to one embodiment, it should be appreciated that other bend angles θ may be employed so as to achieve the first accelerometer 32 oriented at an angle θ relative to the second accelerometer 42 other than 90°.

Referring to FIG. 6, the sensor package 20 is shown following the step of applying an injection molded material to form a dielectric housing 70. The housing 70 encapsulates the sensors along with a metal connector bushing 76 in a protective case. The metal connector bushing 76 allows the sensor package 20 to be fastened or otherwise connected to a supporting structure, such as a structure of a vehicle. The sensor package 20 is further illustrated having a connector sheath 72 that allows for engagement and connection of the external terminals 54 to another connector. The injection molded housing 70 thereby provides a protective housing for the sensor package 20 and maintains the orientation of the sensing devices 32 and 42 and bushing 76 in a fixed orientation.

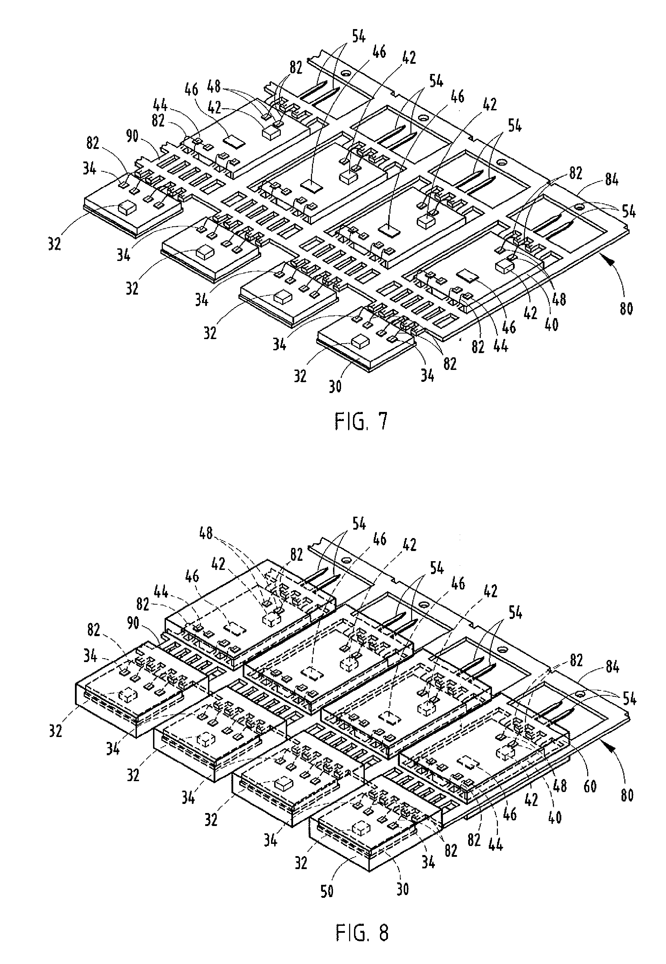

Referring to FIGS. 7 and 8, mass assembly of a plurality of sensors is illustrated, according to another embodiment of the present invention. In this embodiment, multiple pairs of substrates 30 and 40 having sensing circuitry 32 and 42 may be fabricated by assembling the pairs of substrates 30 and 40 to a lead frame 80. The lead frame 80 is electrically conductive and provides components that serve as the lead connectors 90 and connector pins 54. In the example shown, four pairs of first and second substrates with respective sensing circuits 32 and 42 are attached to lead frame 80 as seen in FIG. 7. Each of the substrates 30 and 40 include corresponding first and second sensing circuitries 32 and 42, as well as other circuitries, such as ASIC 46 and contact pads 34, 44 and 48. Contact pads 34, 44 and 48 are provided on the first and second substrates to enable connection to the lead frame 80, which generally forms the interconnecting electrical lead connectors 90 and connector pins 54. In this embodiment, the contact pads 34, 44 and 48 are electrically and physically connected to the lead frame 80 with wire bonds 82. It should be appreciated that other connectors may be employed to electrically and physically connect the substrates 30 and 40 to the lead frame 80 which provides the lead connectors 90 and connector pins 54.

Following assembly of the lead frame 80 to the first and second substrates 30 and 40, each of the first and second substrates 30 and 40 are substantially overmolded as seen in FIG. 8. In doing so, each of the first substrates 30 are substantially encapsulated in a first overmold 50, and each of the second substrates 40 are substantially encapsulated in a second overmold 60. Following the overmolding step, each pair of overmolded first and second substrates 50 and 60 and the interconnecting lead connector portions 90 and connector pin portions 54 of the lead frame 80 are separated from the adjoining pair so as to provide for a single pair of overmolded first and second substrates 50 and 60 with interconnecting lead connectors 90 and connector pins 54. The remaining portions 84 of lead frame 80 are also removed. Further, portions of lead frame 80 that connect adjacent lead connectors 90 and connect pins 54 are removed. Following separation of the first and second pairs of overmolded substrates, the bendable lead connectors 90 of the sensor package are bent and the structure is then injection molded as described above. Accordingly, the use of a lead frame 80 may enable enhanced production and handling of a plurality of pairs of substrates and sensors for the sensor package 20 so as to further enhance the assembly process.

Accordingly, the sensor package 20 and assembly method provides for a cost affordable and easy to manufacture multiple-axis sensing device. The sensor arrangement is particularly useful for use on a vehicle 10, such as for crash sensing.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A multiple-axis sensor package (20) comprising:
a first substrate (30) comprising first sensing circuitry (32) for sensing a first parameter (Aₓ) in a first sensing axis (X-axis);
a second substrate (40) comprising second sensing circuitry (42) for sensing a second parameter (A_{y}) in a second sensing axis (Y-axis); and
one or more bent leads (90) connecting the first substrate (30) to the second substrate (40), wherein the one or more bent leads (90) are bent so that the first sensing axis (X-axis) is different than the second sensing axis (Y-axis).

2. The package as defined in claim 1, wherein the first sensing circuitry (32) comprises a first accelerometer and the second sensing circuitry (42) comprises a second accelerometer.

3. The package as defined in claim 2, wherein the first and second accelerometers (32, 42) comprise first and second single-axis accelerometers.

4. The package as defined in claim 3, wherein the first single-axis accelerometer (32) senses acceleration perpendicular to a plane of the first substrate (30) and the second single-axis accelerometer (42) senses acceleration perpendicular to a plane of the second substrate (40).

5. The package as defined in claim 1, wherein the first sensing circuitry (32) senses the first parameter perpendicular to the first substrate (30), and the second sensing circuitry (42) senses the second parameter perpendicular to the second substrate (40).

6. The package as defined in claim 1, wherein the first sensing axis (X-axis) is substantially perpendicular to the second sensing axis (Y-axis).

7. The package as defined in claim 1, wherein the one or more bent leads (90) comprises a lead frame (80) providing mechanical and electrical connection between the first and second substrates (30, 40).

8. The package as defined in claim 1, further comprising a first overmold material (50) substantially encapsulating the first substrate (30) and a second overmold material (60) substantially encapsulating the second substrate (40).

9. The package as defined in claim 1, further comprising an injection molding material (70) substantially encapsulating the first and second substrates (30, 40).

10. The package as defined in claim 9, wherein the injection molding material (70) at least partially encapsulates a connector (76).

11. The package as defined in claim 1, wherein the package (20) is located on a vehicle (10) and operates as a crash sensor package.

12. A method of assembling a multiple-axis sensor package (20), said method comprising the steps of:
providing a first substrate (30);
forming first sensing circuitry (32) on the first substrate (30), said first sensing circuitry (32) sensing a first parameter (Aₓ) in a first sensing axis (X-axis);
providing a second substrate (40);
forming second sensing circuitry (42) on the second substrate (40), said second sensing circuitry (42) sensing a second parameter (A_{y}) in a second sensing axis (Y-axis);
connecting the first substrate (30) to the second substrate (40) with one or more bendable leads (90); and
bending the one or more bendable leads (90) so as to orient the first substrate (30) at an angle (θ) different than the second substrate (40) such that the first sensing axis (X-axis) is different than the second sensing axis (Y-axis).

13. The method as defined in claim 12, wherein the step of bending the one or more bendable leads (90) comprises bending the one or more bendable leads (90) at an angle (θ) of approximately 90°.

14. The method as defined in claim 12, wherein the first sensing circuitry (32) comprises a first accelerometer and the second sensing circuitry (42) comprises a second accelerometer.

15. The method as defined in claim 14, wherein the first and second accelerometers (32, 42) comprise first and second single-axis accelerometers.

16. The method as defined in claim 12 further comprising the step of mounting the package (20) on a vehicle (10) to operate as a crash sensing package.

17. The method as defined in claim 12 further comprising the step of overmolding the first and second substrates (30, 40) with first and second overmold materials (50, 60).

18. The method as defined in claim 12 further comprising the step of applying an injection molding material (70) to substantially encapsulate the first and second substrates (30, 40).

19. The method as defined in claim 18, wherein the step of applying an injection molding material (70) at least partially encapsulates a connector (76).
